# EUROPÄISCHE PATENTSCHRIFT

(11) **EP 3 823 926 B1**
(45) Veröffentlichungstag und Bekanntmachung des Hinweises auf die Patenterteilung: **07.09.2022**
(21) Anmeldenummer: 19742347.8
(22) Anmeldetag: 18.07.2019
(51) Int. Cl.: C01B 3/02, C01B 3/34, C01C 1/04

(54) **VERFAHREN UND VORRICHTUNG ZUR HERSTELLUNG VON AMMONIAK ODER WASSERSTOFF UND VERWENDUNG DER VORRICHTUNG**
METHOD AND DEVICE FOR PRODUCING AMMONIA OR HYDROGEN AND USE OF THE DEVICE
PROCÉDÉ ET DISPOSITIF DE PRODUCTION D'AMMONIAQUE OU D'HYDROGÈNE ET UTILISATION DU DISPOSITIF

(30) Priorität: 20.07.2018 DE 102018117657
(43) Veröffentlichungstag der Anmeldung: 26.05.2021
(73) Patentinhaber: thyssenkrupp Industrial Solutions AG, 45143 Essen (DE); thyssenkrupp AG, 45143 Essen (DE)
(72) Erfinder: SIGGE, Sebastian, 44575 Castrop-Rauxel (DE); NÖLKER, Klaus, 44265 Dortmund (DE); JAHN, Steffen, 59494 Soest (DE)
(74) Vertreter: thyssenkrupp Intellectual Property GmbH
(86) Internationale Anmeldenummer: PCT/EP2019/069312
(87) Internationale Veröffentlichungsnummer: WO 2020/016333

(56) Entgegenhaltungen:
- EP-B1- 2 155 603
- WO-A1-2018/055067
- DE-A1-102016 103 321
- US-A1- 2009 242 841
- US-A1- 2016 017 802

## Beschreibung

### Stand der Technik

Die vorliegende Erfindung betrifft eine Vorrichtung zur Herstellung von Ammoniak oder Wasserstoff, ein Verfahren zur Herstellung von Ammoniak oder Wasserstoff und eine Verwendung der Vorrichtung.

Zur Herstellung von Ammoniak wird üblicherweise in einer Vorrichtung zur Herstellung von Ammoniak ein Synthesegas, das gewöhnlich neben Wasserstoff und Stickstoff zusätzliche Inertgase wie Methan oder Edelgas enthält, in Gegenwart eines geeigneten Katalysators umgesetzt. Hierzu wird das Synthesegas in die Vorrichtung eingespeist und durch zumindest einen Katalysator gefüllten Reaktor geführt, in dem dann Ammoniak erzeugt wird. Übliche Vorrichtungen zur Herstellung von Ammoniak sind aus dem Stand der Technik wohlbekannt und etwa in den DE 10 2015 210 801 A1, DE 100 57 863 A1 oder DD 225 029 A3 beschrieben. Das Synthesegas wird zumeist in einem Dampfreformierungsprozess erzeugt. Hierzu wird einem Dampfreformer Verbrennungsluft zugeführt. Gegebenenfalls wird ein Luftvorwärmer dem Dampfreformer vorgeschaltet. Ebenso kann es notwendig sein, die Verbrennungsluft schon vor der Zufuhr in den Luftvorwärmer (oder den Dampfreformer) zu erwärmen. Dies kann mit Hilfe eines Wärmetauschers (= Calorifier) geschehen.

Das Erzeugen von Wasserstoff erfolgt üblicherweise in einer Anlage (Wasserstoffanlage), in der der Wasserstoff durch Dampfreformierung von Erdgas gewonnen wird. Bei der Reformierung werden Kohlenwasserstoffe in Wasserstoff umgewandelt. Als Nebenprodukte fallen dabei Kohlenmonoxid und Kohlendioxid an. Die Dampfreformierung erfolgt in einem Dampfreformer durch eine endotherme Reaktion. Das Produktgas wird gekühlt und in einem Druckwechseladsorber gereinigt, um möglichst reinen Wasserstoff zu erzeugen. Ein solches Verfahren ist etwa aus der DE 10 2016 103 321 A1 bekannt. Die DE 10 2010 020 406 A1 offenbart ein Verfahren zum Betreiben eines Reformerofens und Reformeranlage. Die US 2016/0017802 A1 offenbart ein Verfahren zur Wasserstoffherstellung. Die DE 10 2011 015 717 A1 offenbart eine Wärmerückgewinnungseinrichtung.

Die aus dem Stand der Technik bekannten Verfahrensführungen können vor allem dann zu Nachteilen führen, wenn die bekannten Verfahren bei niedrigen Umgebungstemperaturen durchgeführt werden. So kann die Verbrennungsluft bei niedrigen Umgebungstemperature im Calorifier (Wärmetauscher) zu Vereisungen führen. Auch während des Hochfahrens einer Vorrichtung zur Herstellung von z.B. Ammoniak (=Ammoniakanlage) kann es bei niedrigen Umgebungstemperaturen zu Gefrierpunktsunterschreitungen im Calorifier kommen. Dies führt insbesondere dann zu Problemen, wenn dieser mit Reaktionsnebenprodukten, etwa einem Prozesskondensat, betrieben wird, die erst am Ende des Anfahrprozesses zur Verfügung stehen. Vor der Inbetriebnahme des Calorifiers entspricht die Wandtemperatur des Calorifiers lediglich der Außentemperatur. Liegt die Außentemperatur unterhalb des Gefrierpunkts der zum Betrieb des Calorifiers verwendeten Mittel etwa dem oben genannten Prozesskondensat, können diese gefrieren. Dieser Gefrierprozess kann zu Schäden im Calorifier führen und einen effizienten Betrieb der Anlage verhindern.

In Regionen, in denen üblicherweise niedrige Temperaturen herrschen, wird gemäß dem Stand der Technik oft mit Glykol versetztes Wasser verwendet, um ein Gefrieren eines Heizmediums zu verhindern. Der Einsatz von Glykol ist allerdings aus verschiedenen Gründen nachteilhaft, so dass ein Bedürfnis besteht, eine Alternative zur Verwendung von GlykolWasser-Gemischen bereitzustellen.

Darüber hinaus besteht ein Bedürfnis, Lösungen für solche Anlagen bereitzustellen, in denen ein Heizmedium, das Gefrierprozesse in dem Calorifier unterbinden soll, erst nach geraumer Zeit nach Inbetriebnahme zur Verfügung steht. Ein Beispiel für eine solche Anlage ist eine Ammoniakanlage.

### Offenbarung der Erfindung

Der vorliegenden Erfindung liegt daher die Aufgabe zugrunde, ein Verfahren zur Herstellung von Ammoniak bereitzustellen, das Nachteile des Stands der Technik überwindet, insbesondere geeignet ist, schon während des Hochfahrens der Ammoniakanlage ein Gefrieren der Betriebsmittel eines vor dem Reformer angeordneten Wärmetauschers zu verhindern. Diese Aufgabe wird gelöst durch eine Vorrichtung für die Herstellung von Ammoniak oder Wasserstoff, umfassend a) eine Gasstromzufuhr mit einer (verbunden durch einen nachfolgend beschriebenen Wärmetauscher und einen Gastromvorwärmer) nachgeschalteten Verbindungsleitung zu einem Dampfreformer mit einer Abhitzestrecke, wobei zwischen der Gastromzufuhr und nachgeschalteten Verbindungsleitung die nachfolgend unter b) und c) beschriebenen Elemente angeordnet sind, b) einen der Gasstromzufuhr nachgeschalteten Wärmetauscher, wobei der nachgeschaltete Wärmetauscher außerhalb der Abhitzestrecke angeordnet ist; c) einen dem Wärmetauscher nachgeschalteten Gasstromvorwärmer, insbesondere Luftvorwärmer; d) eine dem Gasstromvorwärmer nachgeschaltete Rezirkulationsleitung zu der Gasstromzufuhr und dem Gasstromvorwärmer nachgeschaltete Verbindungsleitung zu dem Dampfreformer, oder eine dem Gasstromvorwärmer nachgeschaltete und dem Wärmetauscher vorgeschalte Rezirkulationsleitung zu der Verbindungsleitung, und e) den Dampfreformer mit der Abhitzestrecke, wobei die Abhitzestrecke thermisch in Kontakt steht mit dem Gasstromvorwärmer, insbesondere Luftvorwärmer, und wobei der Durchgang des im Gasstromvorwärmer erwärmten Gasstroms durch die Rezirkulationsleitung und damit auch durch die dem Gasstromvorwärmer nachgeschaltete Verbindungsleitung zu dem Dampfreformer regelbar ist. Der Ausdruck "Gastromvorwärmer umfasst bevorzugt im Sinne der Erfindung Plattenwärmetauscher und Rohrbündelwärmetauscher. Der Ausdruck "nachgeschaltet" umfasst im Sinne der Erfindung geeignete Rohre, Kanäle, Gebläse, Pumpen, Kompressoren zum Transport von Gasen und/oder Flüssigkeiten. Zwischen den nachgeschalteten Elementen können weitere nicht genannte Elemente, z.B. Wärmetauscher, Gastromvorwärmer, Gebläse und/oder Kompressoren vorhanden sein.

In einer zweckmäßigen Ausführungsform kann vorgesehen sein, dass die Vorrichtung ferner eine Verbindung umfasst, mittels der der Wärmetauscher und ein anderer Teil der Vorrichtung verbunden sind, wobei in dem besagten anderen Teil der Vorrichtung das Entstehen oder Vorhandensein von Prozesskondensat, Kesselspeisewasser oder Dampf vorgesehen ist. Das genannte Prozesskondensat kann beispielsweise in einer Ammoniakanlage beim Abkühlen des Synthesegases an mehreren Stellen der Anlage entstehen. Im Wesentlichen handelt es sich bei dem Prozesskondensat um Wasser mit verschiedenen Verunreinigungen, wie z.B. CO₂. Die Konzentrationen der Verunreinigungen liegen hierbei im Allgemeinen in einem Bereich von 0.01 mol-% oder weniger. Die Temperatur des Prozesskondensats beträgt üblicherweise etwa 120 bis 140°C.

Erfindungsgemäß ist vorgesehen, dass die Vorrichtung zur Herstellung von Ammoniak oder Wasserstoff, neben den angegeben, für die Erfindung wesentlichen Bestandteilen, weitere typische Bestandteile umfasst, die für Vorrichtungen zur Herstellung von Ammoniak bzw. Wasserstoff bekannt und notwendig sind.

Durch den Einsatz der erfindungsgemäßen Vorrichtung ist es möglich, bei Außentemperaturen, die den Gefrierpunkt der Mittel zum Betrieb eines in der Anlage enthaltenen Wärmetauschers (insbesondere des Prozesskondensats, das in einem anderen Teil der Vorrichtung entsteht) unterschreiten, die Vereisung von Kondensat im Wärmetauscher oder das Gefrieren der Mittel zum Betrieb des Wärmetauschers in demselben zu verhindern. Hierdurch können Schäden am Wärmetauscher vermieden und ein effizienter Betrieb der Anlage gewährleistet werden. Insbesondere kann durch die Rezirkulation des vorerwärmten Gasstroms während des Betriebs einer Anlage zur Herstellung von zum Beispiel Ammoniak oder Wasserstoff eine Taupunktunterschreitung in dem dem Dampfreformer vorgeschalteten Wärmetauscher bei zum Beispiel ungeplant niedrigen Umgebungstemperaturen gezielt verhindert werden. Außerdem erlaubt die erfindungsgemäße Vorrichtung eine problemlose Inbetriebnahme einer Anlage zur Herstellung von zum Beispiel Ammoniak oder Wasserstoff unter Verwendung eines Dampfreformers, beispielsweise Primärreformers. Der vermittels der Abhitzestrecke im Gasstromvorwärmer erwärmte Gasstrom wird über die Rezirkulationsleitung, welche in die Verbindungsleitung mündet, mit dem kühlen, über die Gastromzufuhr erhaltenen Gasstrom, in der Regel der Außenluft, vermengt. Das derart erwärmte Gasgemisch passiert den Wärmetauscher, durch den vorzugsweise noch kein Wärmetauscherfluid geleitet wird, und erwärmt diesen dabei. Sobald der Wärmetauscher auf diese Weise hinreichend vorgewärmt worden ist, kann dieser in Betrieb genommen werden, ohne dass Probleme bedingt durch zum Beispiel Tauwasserbildung oder Vereisung zu befürchten sind.

Erfindungsgemäß kann in einer Ausführungsform vorgesehen sein, dass der einwandfreie Betrieb des Wärmetauschers, z.B. mittels Prozesskondensats dadurch aufrechterhalten wird, dass bei tiefen Umgebungstemperaturen der Abhitzestrecke entstammende Abwärme eines bereits im Dauerbetrieb befindlichen Dampfreformers genutzt wird, kühle Verbrennungsluft vor der Passage durch den Wärmetauscher aufzuwärmen. In einer weiteren Ausführungsform kann vorgesehen sein, beim Anfahren des Dampfreformers den Wärmetauscher (=Calorifier) erst dann in Betrieb zu nehmen, wenn durch thermischen Kontakt der Abhitzestrecke des Dampfreformers mit dem Gasstromvorwärmer bzw. dem Luftvorwärmer ein vorgewärmter Gasstrom bzw. Verbrennungsluftstrom vorliegt. Dieser Gasstrom wird nach dem Gasstromvorwärmer bzw. Luftvorwärmer, der in einer Ausführungsform auch innerhalb der Abhitzestrecke des Dampfreformers angeordnet sein kann, und mit dieser in thermischem Kontakt steht, abgezweigt und dem Wärmetauscher zugeführt. Das Zuführen kann durch beliebige geeignete Mittel, etwa ein Gebläse, erfolgen. Der so vorgewärmte Gasstrom wird mit der Außenluft vermischt, um die Eintrittstemperatur in den Calorifier über den Gefrierpunkt anzuheben. Dies ermöglicht die Beaufschlagung des Calorfiers mit geeigneten Mitteln zum Betrieb desselben, etwa eines Prozesskondensats, ohne dass es zu Gefrierpunktunterschreitungen kommen kann.

Bei dem Wärmetauscher kann es sich um übliche aus dem Stand der Technik bekannte Wärmetauscher handeln, etwa Wärmetauscherbündel, Platten-Wärmetauscher etc. Erfindungsgemäß ist die Natur des Wärmetauschers allerdings nicht beschränkt. Ebenso kann eine Kombination von mehreren Wärmetauscherelementen vorgesehen sein. Bevorzugt wird hier auf Wärmetauscherbündel zurückgegriffen.

In einer weiteren Ausführungsform kann vorgesehen sein, dass die Vorrichtung ferner ein Gasgebläse für die Verbindungsleitung umfasst, das dem Wärmetauscher vorgeschaltet ist. Zweckmäßigerweise ist das Gasgebläse dabei auch dem Eintritt der Rezirkulationsleitung in die Verbindungsleitung nachgeschaltet angeordnet. Hierdurch kann ein besonders gleichmäßiger Gasstrom erzeugt werden.

Eine Einheit einer erfindungsgemäßen Vorrichtung ist im Sinne der Erfindung einer weiteren Einheit dieser Vorrichtung vorgeschaltet, wenn durch die geschilderte reguläre Arbeitsweise dieser Vorrichtung eine Abfolge an aufeinander mittelbar oder unmittelbar aufeinander folgenden Einheiten vorgegeben ist und diese Einheit in der Verarbeitungsfolge vor einer nachfolgenden Einheit vorzuliegen hat. Beispielsweise ist die Gasstromzufuhr dem Wärmetauscher vorgeschaltet. Hierbei ist unmaßgeblich, ob z.B. ein Prozessfluid unmittelbar in beiden aufeinanderfolgenden Einheiten vorliegt bzw. in diesen fließt. Vielmehr reicht es hierfür auch aus, dass eine Wechselwirkung bei der Passage der jeweiligen Einheiten eintreten kann. Das gleiche gilt für den Begriff "nachgeschaltet". So kann die über die Gasstromzufuhr in die Verbindungsleitung eingespeiste Verbrennungsluft direkt durch ein der Gasstromzufuhr nachgeschaltetes Gasgebläse fließen sowie im Anschluss den dem Gebläse nachgeschalteten Wärmetauscher passieren und hierbei mit diesem thermisch wechselwirken, ohne zugleich zum Beispiel durch die Rohre des Wärmetauschers selber zu fließen, welche dem Wärmetauscherfluid vorbehalten sind.

Bevorzugt ist eine Leitung vom Gasstromvorwärmer in die Rezirkulationsleitung und die Verbindungsleitung umfasst. Ausgehend von dieser beschriebenen Leitung können die Gasströme in die Gastromzufuhr und die nachgeschaltete Verbindungsleitung erfolgen und optional auch über ein geeignetes Verbindungsstück (z.B. T-Stück) reguliert werden.

Die Aufgabe wird ferner gelöst durch ein Verfahren für die Herstellung von Ammoniak oder Wasserstoff, umfassend die folgenden Schritte: a) Bereitstellen einer erfindungsgemäßen Vorrichtung für die Herstellung von Ammoniak oder Wasserstoff, b) Betreiben des Dampfreformers und hierdurch Erwärmen des mit der Abhitzestrecke in thermischem Kontakt stehenden Gasstromvorwärmers, insbesondere Luftvorwärmers; c) Zuführen eines Gasstroms in den Gasstromvorwärmer, insbesondere Luftvorwärmer, über die Verbindungsleitung, um den Gasstrom zu erwärmen; d) Zuführen zumindest eines Teils des in dem Gasstromvorwärmer, insbesondere Luftvorwärmer, erwärmten Gasstroms über die Rezirkulationsleitung und die Verbindungsleitung zu dem Wärmetauscher, um den Wärmetauscher zu erwärmen.

In einer besonders geeigneten Ausführungsform kann vorgesehen sein, dass der Anteil des Gasstroms, der über die Rezirkulationsleitung und die Verbindungsleitung dem Wärmetauscher zugeführt wird, im Bereich von 0 bis 30 Vol.-%, bevorzugt im Bereich von 3 bis 25 Vol.-%, jeweils bezogen auf den gesamten Gasstrom, der den Gasstromvorwärmer bzw. den Luftvorwärmer verlässt, liegt. Hierbei wird dann zweckmäßigerweise der weitere Anteil bzw. der verbleibende Anteil des Gasstroms dem Dampfreformer zugeführt. Hiermit gelingt eine sehr energieeffiziente Verfahrensführung. Das erfindungsgemäße Verfahren unter Verwendung der erfindungsgemäßen Vorrichtung erlaubt es, die im Vorangehenden beschriebenen technischen Effekte zu erreichen.

Ebenso kann vorgesehen sein, dass der Gasstrom mittels eines Gasgebläses dem Wärmetauscher zugeführt wird. Hierdurch kann ein gleichmäßiger Gasstrom in dem Wärmetauscher erhalten werden.

In einer weiteren Ausführungsform kann vorgesehen sein, dass der Gasstrom ein Strom von Verbrennungsluft ist. Durch die Verwendung von Verbrennungsluft wird eine effektive Verfahrensführung ermöglicht, da so ein ohnehin in dem Wärmetauscher zu verwendendes Gasgemisch gleichzeitig dazu verwendet wird, den Wärmetauscher auf eine für den Betrieb geeignete Temperatur vorzuwärmen.

In einer Ausführungsform kann das Zuführen eines Prozesskondensats zum Wärmetauscher, um den Wärmetauscher zu betreiben, vorgesehen sein. Alternativ kann hierfür auch auf Kesselspeisewasser oder Dampf zurückgegriffen werden.

Ebenso kann vorgesehen sein, dass in Schritt c) der Gasstrom auf eine Temperatur von 5°C oder mehr erwärmt wird. In diesem Temperaturbereich kann besonders effizient die Kondensation oder ein Einfrieren der Betriebsmittel für den Wärmetauscher unterbunden werden.

Schließlich wird die Aufgabe gelöst durch die Verwendung der erfindungsgemäßen Vorrichtung bei einer Umgebungstemperatur von 5°C oder weniger, insbesondere bei einer Umgebungstemperatur von -50°C bis +5°C.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen sowie den beschriebenen Ausführungsbeispielen. Die Zeichnungen illustrieren dabei lediglich beispielhafte Ausführungsformen der Erfindung, welche den Erfindungsgegenstand nicht einschränken.

### Kurze Beschreibung der Figuren

- Fig. 1: zeigt eine schematische Darstellung eines Ausführungsbeispiels der erfindungsgemäßen Vorrichtung zur Herstellung von Ammoniak oder Wasserstoff; und
- Fig. 2: zeigt eine schematische Darstellung eines weiteren Ausführungsbeispiels der erfindungsgemäßen Vorrichtung zur Herstellung von Ammoniak oder Wasserstoff.

### Ausführungsformen der Erfindung

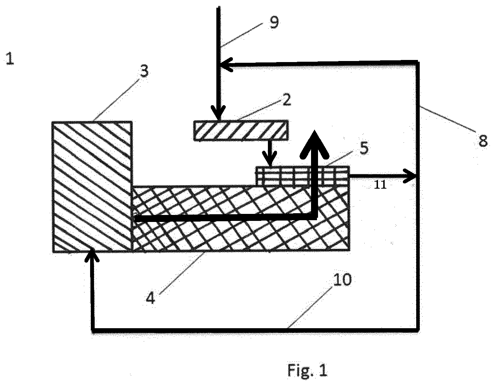

In der Fig. 1 ist schematisch eine Vorrichtung 1 zur Herstellung von Ammoniak gemäß der vorliegenden Erfindung gezeigt. Die Vorrichtung 1 umfasst einen Wärmetauscher 2, einen Dampfreformer 3 mit einer Abhitzestrecke 4 und einen Luftvorwärmer 5.

Die Abhitzestrecke 4 dient dazu, um Wärme, die in dem Dampfreformer 3 entsteht, abzutransportieren, um ein Überhitzen des Dampfreformers 3 zu vermeiden. Hieraus ergibt sich, dass die Temperatur innerhalb der Abhitzestrecke 4 höher ist als die Umgebungstemperatur.

Der Luftvorwärmer 5 ist in thermischen Kontakt der Abhitzestrecke 4 angeordnet. Hierdurch wird regelmäßig gewährleistet, dass die Temperatur in dem Luftvorwärmer 5 der Temperatur desjenigen Abschnitts der Abhitzestrecke 4, mit dem der thermische Kontakt gegeben ist, im Wesentlichen entspricht (oder nur geringfügig unterhalb dieser Temperatur liegt), auf jeden Fall aber ebenfalls gegenüber der Umgebungstemperatur erhöht ist.

Ein durch die Gasstromzufuhr 9 in die Vorrichtung 1 eingebrachter Gasstrom (etwa Verbrennungsluft) wird in dem Luftvorwärmer 5 erwärmt. Dies ist, wie vorangehend geschildert, durch den thermischen Kontakt des Luftvorwärmers 5 mit der Abhitzestrecke 4, die durch Betrieb des Dampfreformers 3 erwärmt ist, möglich. Der so in dem Luftvorwärmer 5 vorgewärmte Gasstrom 11 kann dann über eine Rezirkulationsleitung 8 erneut der Gasstromzufuhr 9 zugeführt und dort in einer zweckmäßigen Ausgestaltung mit der von außen zugeführten Verbrennungsluft vermengt werden. Hierdurch gelangt vorgewärmte Verbrennungsluft bzw. ein vorgewärmtes Verbrennungsluftgemisch in den Wärmetauscher 2. Durch das Zuführen der erwärmten Verbrennungsluft zu dem Wärmetauscher 2 können tiefe Temperaturen im Wärmetauscher 2 verhindert werden. Etwa kann so das Gefrieren eines Prozesskondensats, das zum Betrieb des Wärmetauschers 2 verwendet wird, vermieden werden. Im Ergebnis kann mit der erfindungsgemäßen Vorrichtung die Verbrennungs- bzw. Umgebungsluft 9 durch die Rauchgasabwärme aus dem Dampfreformer 4 erwärmt werden. Diese teilweise vorgewärmte Luft kann über eine dem Gasstromvorwärmer entstammende Leitung 11 sodann einerseits mit einem ersten Teil über die Leitung 8 der kalten Verbrennungs- bzw. Umgebungsluft und andererseits mit dem verbleibenden Teil über die Verbindungsleitung 10 dem Reformer 3 zugeführt werden.

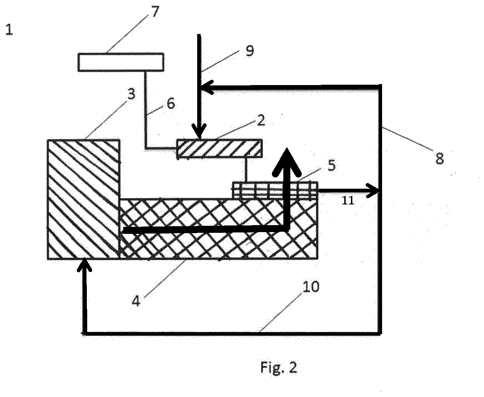

Die in der Fig. 2 gezeigte Vorrichtung umfasst alle Bestandteile der Vorrichtung der Fig. 1. Ferner umfasst ist eine Verbindung 6, die den Wärmetauscher 2 mit einem anderen Teil der Vorrichtung 7 verbindet, wobei in dem anderen Teil der Vorrichtung ein Prozesskondensat erzeugt wird. Die Verbindung 6 zwischen dem Wärmetauscher 2 und dem anderen Teil der Vorrichtung 7 ist derart, dass das Prozesskondensat von dem anderen Teil 7 zu dem Wärmetauscher 2 transportiert werden kann, um diesen durch die Zufuhr des Prozesskondensats in Betrieb nehmen zu können.

### Ausführungsbeispiele

Weitere Merkmale und Vorteile des erfindungsgemäßen Verfahrens ergeben sich aus der folgen detaillierten Beschreibung von Ausführungsbeispielen.

In einer üblichen Ammoniakanlage, die, in dieser Reihenfolge im Hinblick auf einen zugeführten Verbrennungsluftstrom, ein Verbrennungsluftgebläse, einen Wärmetauscher, einen Luftvorwärmer und einen Dampfreformer mit einer Abhitzestrecke umfasst, wobei der Luftvorwärmer in der Abhitzestrecke des Dampfreformers angeordnet ist, wurde das Anfahren der Anlage mit dem Ziel simuliert, eine Temperatur eines Verbrennungsluftstroms, der mittels des Verbrennungsluftgebläses dem Wärmetauscher zugeführt wurde, oberhalb von 5°C zu erhalten. Untersucht wurde die Abhängigkeit der hierfür notwendigen Maßnahmen von der Umgebungstemperatur.

Geeignete Bedingungen konnten dann erhalten werden, wenn die Last des Dampfreformers zumindest 80% betrug. Bei einer Umgebungstemperatur von -37°C konnte so eine Gastemperatur von 5°C innerhalb des Wärmetauschers erhalten werden, wenn 20 Vol.-% der den Luftvorwärmer durchlaufenden Verbrennungsluft mittels des Verbrennungsluftgebläses dem Wärmetauscher zugeführt wurde. Bei einer Umgebungstemperatur von -10°C erwies sich schon eine Rückzirkulation von 7 Vol.-% der Verbrennungsluft als ausreichend. Die Temperatur in der Abhitzestrecke betrug hierbei etwa 300°C.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Vorrichtung (1) für die Herstellung von Ammoniak oder Wasserstoff, umfassend
a) eine Gasstromzufuhr (9) mit einer nachgeschalteten Verbindungsleitung (10) zu einem Dampfreformer (3) mit einer Abhitzestrecke (4), wobei zwischen der Gastromzufuhr (9) und der nachgeschalteten Verbindungsleitung (10) die nachfolgend unter b) und c) beschriebenen Elemente angeordnet sind,
b) einen der Gasstromzufuhr (9) nachgeschalteten Wärmetauscher (2), wobei der nachgeschaltete Wärmetauscher (2) außerhalb der Abhitzestrecke (4) angeordnet ist;
c) einen dem Wärmetauscher (2) nachgeschalteten Gasstromvorwärmer (5);
d) eine dem Gasstromvorwärmer (5) nachgeschaltete Rezirkulationsleitung (8) zu der Gasstromzufuhr (9) und die dem Gasstromvorwärmer (5) nachgeschaltete Verbindungsleitung (10) zu dem Dampfreformer (3), und
e) den Dampfreformer (3) mit der Abhitzestrecke (4), wobei die Abhitzestrecke (4) thermisch in Kontakt steht mit dem Gasstromvorwärmer (5) und wobei der Durchgang des im Gasstromvorwärmer (5) erwärmten Gasstroms durch die Rezirkulationsleitung (8) regelbar ist.

2. Vorrichtung (1) nach Anspruch 1, ferner umfassend
eine Verbindungsleitung (6), mittels der der Wärmetauscher (2) und ein anderer Teil der Vorrichtung (7) verbunden sind, wobei in dem besagten anderen Teil der Vorrichtung (7) das Entstehen oder Vorhandensein von Prozesskondensat, Kesselspeisewasser oder Dampf vorgesehen ist.

3. Vorrichtung (1) nach Anspruch 1 oder 2, ferner umfassend
ein Gasgebläse für die Gasstromzufuhr (9), das dem Wärmetauscher (2) vorgeschaltet und/oder dem Eintritt der Rezirkulationsleitung (8) in die Gasstromzufuhr (9) nachgeschaltet angeordnet ist.

4. Vorrichtung nach einem der Ansprüche 1 bis 3, ferner umfassend eine Leitung (11) vom Gasstromvorwärmer (5) in die Rezirkulationsleitung (8) und die Verbindungsleitung (10).

5. Verfahren für die Herstellung von Ammoniak oder Wasserstoff, umfassend die folgenden Schritte:
a) Bereitstellen einer Vorrichtung (1) nach einem der Ansprüche 1 bis 3
b) Betreiben des Dampfreformers (3) und hierdurch Erwärmen des mit der Abhitzestrecke (4) in thermischem Kontakt stehenden Gasstromvorwärmers (5);
c) Zuführen eines Gasstroms in den Gasstromvorwärmer (5) über die Gasstromzufuhr (9), um den Gasstrom zu erwärmen;
d) Zuführen zumindest eines Teils des in dem Gasstromvorwärmer (5) erwärmten Gasstroms über die Rezirkulationsleitung (8) und die Gasstromzufuhr (9) zu dem Wärmetauscher (2), um den Wärmetauscher (2) zu erwärmen.

6. Verfahren nach Anspruch 5, **dadurch gekennzeichnet, dass**
der Gasstrom mittels eines Gasgebläses dem Wärmetauscher (2) zugeführt wird.

7. Verfahren nach einem der Ansprüche 5 oder 6, **dadurch gekennzeichnet, dass** der Gasstrom ein Strom von Verbrennungsluft ist.

8. Verfahren nach einem der Ansprüche 5 bis 7, ferner umfassend das Zuführen von Prozesskondensat, Kesselspeisewasser oder Dampf zum Wärmetauscher (2), um den Wärmetauscher (2) zu betreiben.

9. Verfahren nach einem der Ansprüche 5 bis 8, **dadurch gekennzeichnet, dass** in Schritt d) der Gasstrom auf eine Temperatur von 5°C oder mehr erwärmt wird.

10. Verfahren nach einem der Ansprüche 5 bis 9, **dadurch gekennzeichnet, dass** der Anteil des Gasstroms, der über die Rezirkulationsleitung (8) und die Gasstromzufuhr (9) dem Wärmetauscher (2) zugeführt wird, im Bereich von 0 bis 30 Vol.-%, bezogen auf den gesamten Gasstrom, der den Gasstromvorwärmer (5) verlässt, ist und dass ein weiterer Anteil oder der verbleibende Anteil des Gasstroms dem Dampfreformer (3) zugeführt wird.

11. Verwendung einer Vorrichtung (1) nach einem der Ansprüche 1 bis 4 für die temporäre Temperierung eines einem Wärmetauscher zuzuführenden Gasstroms bei einer Umgebungstemperatur im Bereich von -50°C bis +5°C.

## Claims

1. An apparatus (1) for the production of ammonia or hydrogen, comprising
a) a gas stream feed conduit (9) having a downstream connecting conduit (10) to a steam reformer (3) having a waste heat section (4), with the elements described below under b) and c) being arranged between the gas stream feed conduit (9) and the downstream connecting conduit (₁₀),
b) a heat exchanger (2) located downstream of the gas stream feed conduit (9), with the downstream heat exchanger (2) being arranged outside the waste heat section (4);
c) a gas stream preheater (5) located downstream of the heat exchanger (2);
d) a recirculation conduit (8) which is located downstream of the gas stream preheater (5) and leads to the gas stream feed conduit (9) and the connecting conduit (10) which is located downstream of the gas stream preheater (5) and leads to the steam reformer (3), and
e) the steam reformer (3) with the waste heat section (4),
where the waste heat section (4) is in thermal contact with the gas stream preheater (5) and the flow of the gas stream which has been heated in the gas stream preheater (5) through the recirculation conduit (8) can be regulated.

2. The apparatus (1) as claimed in claim 1, further comprising
a connecting conduit (6) by means of which the heat exchanger (2) and another part of the apparatus (7) are connected, where the formation or presence of process condensate, boiler feed water or steam is provided in said other part of the apparatus (7).

3. The apparatus (1) as claimed in claim 1 or 2, further comprising a gas blower for the gas stream feed conduit (9), which is located upstream of the heat exchanger (2) and/or is arranged downstream of the entry of the recirculation conduit (8) into the gas stream feed conduit (9).

4. The apparatus as claimed in any of claims 1 to 3, further comprising a conduit (11) from the gas stream preheater (5) into the recirculation conduit (8) and the connecting conduit (10).

5. A process for producing ammonia or hydrogen, comprising the following steps:
a) provision of an apparatus (1) as claimed in any of claims 1 to 3;
b) operation of the steam reformer (3) and thus heating of the gas stream preheater (5) which is in thermal contact with the waste heat section (4);
c) introduction of a gas stream into the gas stream preheater (5) via the gas stream conduit (9) in order to heat the gas stream;
d) introduction of at least part of the gas stream which has been heated in the gas stream preheater (5) via the recirculation conduit (8) and the gas stream feed conduit (9) into the heat exchanger (2) in order to heat the heat exchanger (2).

6. The process as claimed in claim 5, **characterized in that**
the gas stream is introduced into the heat exchanger (2) by means of a gas blower.

7. The process as claimed in either claim 5 or 6, **characterized in that** the gas stream is a stream of combustion air.

8. The process as claimed in any of claims 5 to 7, further comprising introduction of process condensate, boiler feed water or steam into the heat exchanger (2) in order to operate the heat exchanger (2).

9. The process as claimed in any of claims 5 to 8, **characterized in that** the gas stream is heated to a temperature of 5°C or more in step d).

10. The process as claimed in any of claims 5 to 9, **characterized in that** the proportion of the gas stream which is introduced via the recirculation conduit (8) and the gas stream feed conduit (9) into the heat exchanger (2) is in the range from 0 to 30% by volume, based on the total gas stream leaving the gas stream preheater (5), and **in that** a further proportion or the remaining proportion of the gas stream is fed to the steam reformer (3).

11. The use of an apparatus (1) as claimed in any of claims 1 to 4 for the temporary temperature control of a gas stream to be introduced into a heat exchanger in the case of an ambient temperature in the range from -50°C to +5°C.

## Revendications

1. Dispositif (1) pour la production d'ammoniac ou d'hydrogène, comprenant
a) une amenée de courant de gaz (9) avec une conduite de liaison (10) en aval vers un reformeur à vapeur (3) avec une section de récupération de chaleur (4), les éléments décrits ci-dessous en b) et c) étant agencés entre l'amenée de courant de gaz (9) et la conduite de liaison (10) en aval,
b) un échangeur de chaleur (2) en aval de l'amenée de courant de gaz (9), l'échangeur de chaleur (2) en aval étant agencé à l'extérieur de la section de récupération de chaleur (4) ;
c) un préchauffeur de courant de gaz (5) en aval de l'échangeur de chaleur (2) ;
d) une conduite de recirculation (8) en aval du préchauffeur de courant de gaz (5) vers l'amenée de courant de gaz (9) et la conduite de liaison (10) en aval du préchauffeur de courant de gaz (5) vers le reformeur à vapeur (3), et
e) le reformeur à vapeur (3) avec la section de récupération de chaleur (4),
la section de récupération de chaleur (4) étant en contact thermique avec le préchauffeur de courant de gaz (5) et le passage du courant de gaz chauffé dans le préchauffeur de courant de gaz (5) à travers la conduite de recirculation (8) pouvant être réglé.

2. Dispositif (1) selon la revendication 1, comprenant en outre
une conduite de liaison (6), au moyen de laquelle l'échangeur de chaleur (2) et une autre partie du dispositif (7) sont reliés, la formation ou la présence de condensat de processus, d'eau d'alimentation de chaudière ou de vapeur étant prévue dans ladite autre partie du dispositif (7).

3. Dispositif (1) selon la revendication 1 ou 2, comprenant en outre
un ventilateur de gaz pour l'amenée de courant de gaz (9), qui est agencé en amont de l'échangeur de chaleur (2) et/ou en aval de l'entrée de la conduite de recirculation (8) dans l'amenée de courant de gaz (9).

4. Dispositif selon l'une quelconque des revendications 1 à 3, comprenant en outre une conduite (11) du préchauffeur de courant de gaz (5) dans la conduite de recirculation (8) et la conduite de liaison (10) .

5. Procédé de production d'ammoniac ou d'hydrogène, comprenant les étapes suivantes :
a) la fourniture d'un dispositif (1) selon l'une quelconque des revendications 1 à 3,
b) l'exploitation du reformeur à vapeur (3) et ainsi le chauffage du préchauffeur de courant de gaz (5) en contact thermique avec la section de récupération de chaleur (4) ;
c) l'amenée d'un courant de gaz dans le préchauffeur de courant de gaz (5) par le biais de l'amenée de courant de gaz (9) afin de chauffer le courant de gaz ;
d) l'amenée d'au moins une partie du courant de gaz chauffé dans le préchauffeur de courant de gaz (5) par le biais de la conduite de recirculation (8) et de l'amenée de courant de gaz (9) vers l'échangeur de chaleur (2), afin de chauffer l'échangeur de chaleur (2).

6. Procédé selon la revendication 5, **caractérisé en ce que** le courant de gaz est amené à l'échangeur de chaleur (2) au moyen d'un ventilateur de gaz.

7. Procédé selon l'une quelconque des revendications 5 ou 6, **caractérisé en ce que** le courant de gaz est un courant d'air de combustion.

8. Procédé selon l'une quelconque des revendications 5 à 7, comprenant en outre
l'amenée de condensat de processus, d'eau d'alimentation de chaudière ou de vapeur à l'échangeur de chaleur (2), afin d'exploiter l'échangeur de chaleur (2).

9. Procédé selon l'une quelconque des revendications 5 à 8, **caractérisé en ce que**, dans l'étape d), le courant de gaz est chauffé à une température de 5 °C ou plus.

10. Procédé selon l'une quelconque des revendications 5 à 9, **caractérisé en ce que** la proportion du courant de gaz qui est amenée à l'échangeur de chaleur (2) par le biais de la conduite de recirculation (8) et de l'amenée de courant de gaz (9) est dans la plage allant de 0 à 30 % en volume par rapport au courant de gaz total qui quitte le préchauffeur de courant de gaz (5) et **en ce qu'**une autre proportion ou la proportion restante du courant de gaz est amenée au reformeur à vapeur (3).

11. Utilisation d'un dispositif (1) selon l'une quelconque des revendications 1 à 4 pour conditionner temporairement en température un courant de gaz à amener à un échangeur de chaleur à une température ambiante dans la plage allant de -50 °C à +5 °C.
